(19) Europäisches Patentamt / European Patent Office / Office européen des brevets

(11) **EP 4 108 751 A1**

(12) **EUROPEAN PATENT APPLICATION**

(43) Date of publication:
**28.12.2022 Bulletin 2022/52**

(21) Application number: **21181511.3**

(22) Date of filing: **24.06.2021**

(51) International Patent Classification (IPC):
**C11D 3/38** *(2006.01)*     **C11D 3/48** *(2006.01)*
**C11D 7/40** *(2006.01)*     **C11D 17/04** *(2006.01)*
**A01N 63/22** *(2020.01)*     **C11D 3/00** *(2006.01)*

(52) Cooperative Patent Classification (CPC):
(C-Sets available)
**C11D 3/48; A01N 63/22; A01P 1/00; C11D 3/0068;
C11D 3/381; C11D 7/40; C11D 17/049**     (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Carl Freudenberg KG
69469 Weinheim (DE)**

(72) Inventors:
• **Grote-Pastré, Julia
  64625 Bensheim (DE)**
• **Bedue, Olivier
  69469 Weinheim (DE)**
• **Davanzo, Mauro
  67063 Ludwigshafen am Rhein (DE)**
• **Borgmeier, Claudia
  64625 Bensheim (DE)**
• **Scholz, Paul
  50931 Köln (DE)**
• **Gersbach, Jens-Peter
  68239 Mannheim (DE)**

(74) Representative: **Fuchs Patentanwälte
Partnerschaft mbB
Westhafenplatz 1
60327 Frankfurt am Main (DE)**

Remarks:
•The complete document including Reference
Table(s) and the Sequence Listing(s) can be
downloaded from the EPO website
•Amended claims in accordance with Rule 137(2)
EPC.

(54) **HOUSEHOLD AND COMMERCIAL CLEANING ARTICLES WITH MORAXELLA SP. INHIBITING ACTIVITY**

(57)     Household and/or commercial cleaning articles are disclosed which show *Moraxella sp.* inhibiting activity of a ratio of less than 0.025 (i.e. 40-fold) in a long-term polymer-matrix test. The result is the reduction of negative effects normally associated with *Moraxella sp.* in such articles.

Figure 3

3a

**(Cont. next page)**

(52) Cooperative Patent Classification (CPC): (Cont.)

C-Sets
**A01N 63/22, A01N 25/34**

3b

■ Others ▢ Moraxella

3c

**Description**

Field of the Invention

Household and/or commercial cleaning articles are disclosed which show *Moraxella sp.* inhibiting activity of a ratio of less than 0.025 (i.e. at least 40-fold) in a long-term polymer-matrix test. The result is the reduction of negative effects normally associated with *Moraxella sp.* in such articles, such as hygienic problems, health problems and/or malodor.

Background of the Invention

Over the last 80 years microbiota of the built environment (BE) have become an ecosystem most intimate to men. Yet the lack of knowledge of this ecosystem is profound, despite its significant impact on humanity.

The bacteria, fungi, and viruses that colonize these environments shape the microbiome, and can fundamentally alter the well-being of humans, including an impact on human health.

For example, within the microbiota of household and/or commercial cleaning articles bacteria have been identified to be associated with negative effects, such as malodor and a number of diseases. An example for a microbial organism being associated with negative effects is *Moraxella sp.*.

*Moraxella sp.,* that colonize for example kitchen cleaning articles, establish a microbiome adapted to this specific habitat niche. They may originate from various sources: human hands (through handling), food materials (during cleaning of dishes and kitchen sink), household areas (house dust, kitchen surfaces) and waste water.

Some *Moraxella sp.* are adapted so well to this specific habitat niche that they show a high tolerance to detergents, desiccation and UV light irradiation, providing one of the possible reasons why they survive even extensive washing-and-drying cycles on household-articles.

Even extended heat treatments, such as for example a treatment in microwaves, did not show the desired effects and may rather damage the household and/or commercial cleaning article than satisfactorily inhibiting *Moraxella sp.*.

Thus, new paths need to be explored which allow control of *Moraxella sp.* in household and/or commercial cleaning articles.

Detailed Description

In a first aspect the present invention pertains to a household and/or commercial cleaning article having a textile layer, a foam and/or sponge layer, and/or an abrasive layer, with *Moraxella sp.* inhibiting activity, preferably characterized by a ratio of less than 0.025 in a long-term polymer-matrix test.

In a second aspect the present invention pertains to a household and/or commercial cleaning article, having a textile layer, a foam and/or sponge layer, and/or an abrasive layer, comprising at least one microbial organism of the *Bacillus subtilis group* in a concentration of about $1 * 10^3$ to $1 * 10^9$ CFU/cm$^3$, preferably in a concentration of about $1 * 10^4$ to $1 * 10^8$ CFU/cm$^3$, more preferred in a concentration of about $1 * 10^6$ to $1 * 10^8$ CFU/cm$^3$, in yet further embodiment in a concentration of about $1 \times 10^7$ CFU/cm$^3$.

In a third aspect the present invention pertains to a household and/or commercial cleaning article, having a textile layer, a foam and/or sponge layer, and/or an abrasive layer, comprising at least one member of the species *Bacillus subtilis* (or B. *subtilis)* in a concentration of about $1 * 10^3$ to $1 * 10^9$ CFU/cm$^3$, preferably in a concentration of about $1 * 10^4$ to $1 * 10^8$ CFU/cm$^3$, more preferred in a concentration of about $1 * 10^6$ to $1 * 10^8$ CFU/cm$^3$, in yet further embodiment in a concentration of about $1 \times 10^7$ CFU/cm$^3$.

Moraxella sp. have been identified to be associated with a number of negative effects, such as diseases and other malaise (see for example "Maruyama et al., Bacteremia due to *Moraxella osloensis:* a case report and literature review, the Brazilian Journal of Infectious Diseases Volume 22, Issue 1, January-February 2018, Pages 60-62).

Thus, the present invention generally relates to a method for degrading negative effects, such as for example hygienic problems, health risks and/or malodors generated by *Moraxella sp.* preferably with regard to surfaces of household and/or commercial cleaning articles. More particularly it relates to the degradation of said negative effects generated by *Moraxella sp.* by the reduction of the abundance of *Moraxella sp.* in a microbiome in the context of household and/or commercial cleaning articles.

The term *"Moraxella sp."* as used herein refers to a genus of Gram-negative bacteria in the *Moraxellaceae* family. It is named after the Swiss ophthalmologist Victor Morax. The organisms are short rods, coccobacilli, or as in the case of *Moraxella catarrhalis,* diplococci in morphology, with α-saccharolytic, oxidase-positive, and catalase-positive properties.

The species comprises *M. atlantae, M. boevrei, M. bovis, M. bovoculi, M. canis, M. caprae, M. catarrhalis, M.*

*caviae, M. cuniculi, M. equi, M. lacunata, M. lincolnii, M. nonliquefaciens, M. oblonga, M. osloensis, M. pluranimalium, M. porci* and *M. saccharolytica.*

*M. catarrhalis* is the clinically most important species under this genus. *M. catarrhalis* usually resides in respiratory tract, but can gain access to the lower respiratory tract in patients with chronic chest disease or compromised host defenses, thus causing tracheobronchitis and pneumonia. For example, it causes a significant proportion of lower respiratory tract infections in elderly patients with COPD and chronic bronchitis. It is also one of the notable causes of otitis media and sinusitis.

*Moraxella lacunata* is one of the causes of blepharoconjunctivitis in human.

*Moraxella bovis* is the cause of infectious bovine keratoconjunctivitis, known colloquially in the United Kingdom as New Forest eye. As a strict aerobe, *M. bovis* is confined to the cornea and conjunctiva, resulting in a progressive, non self-limiting keratitis, ulceration, and - ultimately - rupture of the cornea. The disease is relatively common, infecting cattle only.

*Moraxella sp.* are omnipresent in households and thrive especially well at warm temperatures and alternating conditions between wet and dry states.

One further very unpleasant property *of Moraxella sp.* is the generation of malodors in very diverse areas of the household, such as for example in household and/or commercial cleaning articles. *Moraxella osloensis,* for example, besides being known to cause opportunistic infections, has the potential to generate for example 4-methyl-3-hexenoic acid (4M3H), one of the sources for malodor in textiles.

*M. osloensis,* that colonizes for example kitchen cleaning articles, establishes a microbiome adapted to this specific habitat niche. They may originate from various sources: human hands (through handling), food materials (during cleaning of dishes and kitchen sink), household areas (house dust, kitchen surfaces) and waste water.

Some *members of Moraxella sp.,* for example *M. osloensis,* are so well-adapted to this specific habitat niche that they show a high tolerance to detergents, desiccation and UV light irradiation, providing one of the possible reasons why they survive even extensive washing-and-drying cycles on cleaning articles. The result is a health risk, hygienic problem and/or malodor, especially in such hygienically sensitive areas as kitchens.

Up to now, no practical solutions exist to reduce or inhibit growth of *Moraxella sp.* besides of course antibiotics such as trimethoprim-sulfamethoxazole, erythromycin, tetracyclin and cephalosporins and/or treatments with 70% alcohol. All of this are expensive solutions which should be reserved for hospital treatments, and are not suitable for everyday applications within households.

The "household and/or commercial cleaning articles" according to the present invention are selected from the group of cleaning sponges, cleaning pads (hand pads, machine pads), cleaning wipes, cleaning tissues, cleaning blocks, dirt erasers, etc. However, the household and/or commercial cleaning articles according to the present invention do not encompass cleaning articles for cosmetic use, such as make-up sponges, make-up cleaning pads (cosmetic pads), cotton swabs, etc.

In some embodiments the household and/or commercial cleaning articles of the present invention comprise soft surfaces (such as for example sponges, or fabrics), or hard surfaces (such as for example plastic, glass, wood, metal, stone or ceramic); and combinations thereof. In one embodiment any surface which can be found on a household and/or commercial cleaning article is encompassed.

The term "textile layer" as used herein encompasses woven and non-woven fabrics.

In a preferred embodiment the household and/or commercial cleaning article refers to a modern cleaning sponge. A modern cleaning sponge is a tool or cleaning aid made of soft, porous material.

Typically used for cleaning impervious surfaces, sponges are especially good at absorbing water and water-based solutions. Cleaning sponges were originally made from natural sea sponges, however, they are most commonly made from synthetic materials today. Modern cleaning sponges are made of open-cell foams that can be foamed from various plastics, i.e. polymers, such as polyurethane, polyester, and the like.

In one embodiment a "sponge" is generally built of 2 main parts (such as foam and abrasive part) that are attached to each other (e.g. laminated together). In other embodiment the foam part and/or the abrasive part can also be used separately from each other.

In one embodiment the "foam" part is made of cellulose or polyurethane foam. The density is typically from 10 to 50 kg/m$^3$, preferably from 15 to 45 kg/m$^3$, preferably from 20 to 30 kg/m$^3$, in one embodiment about 20 kg/m$^3$.

The "porosity" is defined herein as the pore fraction of the article. That is, the ratio of pore space volume to bulk volume of the article. Porosity has no dimension and is usually expressed as a percentage:

$$\phi = V_{pore} / V_{bulk}$$

The porosity ranges from 5 to 90; preferably from 15 to 75, more preferably from 20 to 50, most preferably from 20 to 35. The number of pores per cm (measured according to "linear intercept process") are typically from 1 to 50 cm$^{-1}$,

preferably from 5 to 40 cm$^{-1}$, even more preferred from 10 to 30 cm$^{-1}$, in one embodiment about 20 cm$^{-1}$. The porosity is opened to allow sponge to absorb and release water easily and allow cleaning and rinsing.

In other embodiments the sponges of the present invention are made of biobased and or biodegradable materials such as those selected from wood pulp, cellulose, hemp fibers, cotton and combinations thereof.

In yet another embodiment the sponges of the present invention comprise and/or are made of metal meshs, such as scratch-resistant steel wool from steel straw (120 G) or made from stainless steel.

The sponges may further be connected with scouring fleeces (i.e. an "abrasive layer") to loosen hard incrustations. The scouring fleece often consists of polymer fibers that can also be coated with hard mineral particles also called "abrasives" that are optionally fixed with the help of a binder and/or clue. Such abrasives may be selected from the group comprising flint, quartz, corundum, emery, garnet, diamond, silicon carbide, chromium oxides, cubic boron nitride, and combinations thereof.

In one embodiment the "abrasive" part is made of abrasive nonwoven material. The weight of the nonwoven material is preferably from 100 g/m$^2$ to 1000 g/m$^2$, preferably from 200 g/m$^2$ to 800 g/m$^2$, preferably from 300 g/m$^2$ to 700 g/m$^2$, most preferred of about 350 g/m$^2$. The thickness ranges from 2 mm to 15 mm, more preferably from 5 mm to 10 mm, even more preferably about 7.5 mm. The abrasive part consists in one embodiment of fibers (polyamide/polyester) glued together with polymer matrix and containing abrasive particles (generally silica or alumina) to allow dirt scouring and cleaning.

In yet another aspect the cleaning article comprises synthetic fibers, including polyamide, polyester, polyvinyl alcohol, polyvinyl acetate, polyolefines, polycarbonates, glass, carbon, polylactic acid, polyacrylic, polyhydroxyalcanoates, polylacticacid; natural fibers, such as flax, linen, cotton, sisal, viscose, wool, kapok, hemp, chitosan, chitin; synthetic porous materials, such as polyurethane, polyvinyl acetate, polyvinyl alcohol, melamine, synthetic rubber; natural porous materials, such as cellulose, viscose, collagen, gelatin, glucomannan, natural rubber; chemical binders, such as polyacrylic, polyvinylacetate, phenol formaldehyde resins, urea formaldehyde resins, styrene butadiene rubbers; natural binders, such as lignin, tannins, proteins, pectins, natural rubber, starch, gelatin, cellulose derivatives; synthetic abrasives, such as acrylate, polyurethane, phenolic based resins; natural particles, such as grinded nutshells, silica, alumina, carbonate, pumice and combinations thereof.

The typical dimensions for a sponge range from 50 mm to 150 mm (length), preferably from 80 mm to 110 mm (length); and from 25 mm to 120 mm (width); preferably from 50 mm to 80 mm (width); and from 5 mm to 100 mm (thickness); preferably from 15 mm to 50 mm (thickness). The foam can be cut in special nail guard shape to protect fingers. The features such as colors, shapes, dimensions, abrasivities, etc. may be adapted to the needs of the applications, customers and suppliers.

In one aspect the invention pertains to a household and/or commercial cleaning article wherein the article comprises at least one microbial organism, preferably of the *Bacillus subtilis* group.

A sponge can be a medium for the growth of harmful bacteria such as *Moraxella sp.,* especially when it is allowed to remain wet between uses.

Several methods have been used to clean sponges. Studies have investigated the use of the microwave to clean non-metallic domestic sponges that have been thoroughly moistened. A 2006 study found that microwaving wet sponges for two minutes (at 1000 watt power) killed 99% of coliforms, *E. coli,* and MS2 phages, but other species survived. Unfortunately *Moraxella sp.* is among such species surviving such a treatment (Park et al. 2006). It is an inventive finding of the present invention that also the microbial organisms disclosed herein, such as *Bacillus subtilis,* survive both such a heat treatment as well as regular treatments in a dish-washer. Thus, they are particularly suitable to beneficially influence the growth of *Moraxella sp.* that is by inhibiting the growth of *Moraxella sp.* in the household and/or commercial cleaning article.

Microbial organism

The term "microbial organism", as used herein, means a living microorganism which, when administered in adequate amounts, confers a *Moraxella sp.* inhibiting activity, particularly in a long-term polymer-matrix test.

In one embodiment, the microbial organism belongs to the *Bacillus subtilis group.* The term "B*acillus subtilis group"* as used herein means a sub-genus of the family *Bacillaceae,* genus *Bacillus,* comprising the species *Bacillus amyloliquefaciens, Bacillus licheniformis, Bacillus subtilis, Bacillus atrophaeus, Bacillus vallismortis, Bacillus sonorensis* and *Bacillus mojavensis subgroup,* which has *Moraxella sp.* inhibiting activity, in particular characterized by a ratio of less than 0.025 in a long-term polymer-matrix test.

In further embodiments the microbial organism is able to reduce the growth of *Moraxella Sp.* with a ratio of 0.025 or less, preferably 0.02 or less, more preferably 0.015 or less, more preferably 0.01 or less, more preferably 0.005 or less, more preferably 0.0025 or less, even more preferably 0.001 or less in a long-term polymer-matrix test. In some embodiments the presence of *Moraxella sp.* is reduced to such an extent that no metagenomics reads can be detected in the household and/or commercial cleaning article of the present invention.

One of the microbial organisms of the *Bacillus subtilis group* is *Bacillus subtilis*, known also as the hay bacillus or grass bacillus, a Gram-positive, catalase-positive bacterium, found in soil and the gastrointestinal tract of ruminants and humans. As member of the genus *Bacillus*, *B. subtilis* is rod-shaped, and can form a tough, protective endospore, allowing it to tolerate extreme environmental conditions. *B. subtilis* has historically been classified as an obligate aerobe, though evidence exists that it is a facultative anaerobe. *B. subtilis* is considered the best studied Gram-positive bacterium and a model organism to study bacterial chromosome replication and cell differentiation.

The "microbial organisms" as used herein are considered to not endanger human health, e.g. do not harbour acquired antibiotic resistance genes and do not cause any disease, which can be related to that microbial organism. Such "microbial organisms" according to the present invention fulfil the requirements of the Qualified Presumption of Safety (QPS) regulation by the European Food Safety Authority (EFSA).

The term "microbial organism" as used herein encompasses microbial organisms in all life forms, such as in a vegetative form and/or as spores. The ability to prepare spores and vegetative cells is considered routine in the art (Probiotics Antimicrob Proteins, 2019 Sep; 11(3):731-747).

**Effective amount**

The microbial organism should be present on the household and/or commercial cleaning article in effective amounts. The terms "effective amount", "effective concentration" or "effective dosage" are defined herein as the amount, concentration or dosage of microbial organism within the household and/or commercial cleaning article which results in a *Moraxella sp.* inhibiting activity, in particular with a ratio of 0.025 or less, of 0.015 or less, of 0.01 or less measured in a long-term polymer-matrix test.

In another embodiment the *Moraxella sp.* inhibiting activity of the composition is sufficient to significantly inhibit the growth of Moraxella sp. in the household and/or commercial cleaning article in order to reduce malodor resulting in an improvement by at least 0.30 grades, preferably by at least 0.33 grades, preferably at least 0.5 grades, preferably at least 0.67 grades, preferable at least 1 grade, more preferably at least 1.33 grades, even more preferably at least 1.5 grades, even more preferably at least 1.67 grades, most preferred at least 2.0 grades or more, as compared to the control, when measured with the VDA 270-method.

The actual effective dosage in absolute numbers depends on the desired VDA 270-method and also the article in question.

In one embodiment the at least one microbial organism of the *Bacillus subtilis group* is present in the household and/or commercial cleaning article in a concentration of about $1 \times 10^2$ to $1 \times 10^{10}$ CFU/cm$^3$ ("CFU = "colony forming units") relative to the volume of the article under consideration (see below). In further embodiments, the concentration is $1 \times 10^2$ CFU/cm$^3$ or more, $1 \times 10^3$ CFU/cm$^3$ or more, $1 \times 10^4$ CFU/cm$^3$ or more, $1 \times 10^5$ CFU/cm$^3$ or more, $1 \times 10^6$ CFU/cm$^3$ or more, and/or up to $1 \times 10^7$ CFU/cm$^3$, up to $1 \times 10^8$ CFU/cm$^3$, up to $1 \times 10^9$ CFU/cm$^3$ or up to $1 \times 10^{10}$ CFU/cm$^3$. In a further embodiment, the concentration is about $1 \times 10^6$ CFU/cm$^3$ to $1 \times 10^8$ CFU/cm$^3$, in yet further embodiment it is about $1 \times 10^7$ CFU/cm$^3$.

Less than $1 \times 10^2$ CFU/cm$^3$ may not be sufficient to show *Moraxella sp.* inhibiting activity with a ratio of less than 0.025 in a long-term polymer-matrix test. More than $1 \times 10^{10}$ CFU/cm$^3$ normally do not result in a commensurable improvement of *Moraxella sp.* inhibiting activity and/or malodor-inhibiting activity as measured with the VDA 270-method, but just increase the costs of producing such an article.

In yet another embodiment, the concentration of the microbial organism in the household and/or commercial cleaning article can be represented in ng gDNA / mg of material of the household and/or commercial cleaning article, such as sponge material ("mg sponge"). Thus, in one embodiment the concentration of the microbial organism on the surface of the household and/or commercial cleaning article is at least 1 ng gDNA / mg sponge, more preferred at least 5 ng gDNA / mg sponge, even more preferred at least 10 ng gDNA / mg sponge, even more preferred at least 15 ng gDNA / mg sponge, even more preferred at least 20 ng gDNA / mg sponge, even more preferred at least 25 ng gDNA / mg sponge, or at least 30 ng gDNA / mg sponge.

In another embodiment the microbial organism of the *Bacillus subtilis group* is present within the household and/or commercial cleaning article in a concentration of at least about $1 * 10^2$ to $1 * 10^{10}$ CFU/cm$^3$, preferably about $1 * 10^4$ to $1 * 10^8$ CFU/cm$^3$, most preferred of about $1 * 10^5$ to $1 * 10^7$ CFU/cm$^3$.

The CFUs of an article comprising the microbial organism may be measured by the following general steps:

1. 1 cm$^3$ of the article is incubated in 10 ml saline buffer for 5 minutes in a water bath of 80°C;

2. Plating the buffer on ready-to-use Tryptic Soy (TSA) plates (1 ml buffer per plate, 10 plates in total, plate dimensions: 90 mm inner diameter, 15 mm height)

3. Incubating at 37°C for 24h

4. Typing the microbial organism of the *Bacillus subtilis group* per colony with *groEL* sequencing;

5. Counting the number of colonies per microbial organism of the *Bacillus subtilis group* of all ten plates and calculating the specific CFU/cm$^3$ of the article.

Example 1 shows an exemplary measurement.

The evaluation of the fraction of *Moraxella sp.* within the total microbiome of a household and/or commercial cleaning article is done by metagenome sequencing reads (e.g. by *groEL* sequencing). The average total sequencing readout of the microbiome (covering about 10 different bacterial genera) is set to 100%, the average percentage of Moraxella sp. is then calculated in relation thereto (see experimental section for more details).

In some embodiments the fraction of *Moraxella sp.* within the total microbiome of a surface of the inventive household and/or commercial cleaning article is reduced by a factor of at least 10, preferable of at least 50, even more preferred of at least 100, even more preferred of at least 200, most preferred of at least 300 and preferably up to a factor of 400, most preferred even up to a factor of 500, as compared to a microbiome of a conventional household and/or commercial cleaning article (i.e. a household and/or commercial cleaning article without *Moraxella sp.* inhibiting activity).

**Application of microbial organism with *Moraxella* sp.-inhibiting activity on a household article**

The microbial organism with *Moraxella sp.*-inhibiting activity may be applied to a household and/or commercial cleaning article by different means, such as injection, impregnation, spraying, immersing, printing, calendaring, dipping process followed by drying, etc..

Large-scale applications of the microbial organism onto household and/or commercial cleaning articles may by facilitated with specific machines for treating textiles, such as a foulard.

It is important that the microbial organism is applied in an effective amount on the household and/or commercial cleaning article. The successful application of the microbial organism may be tested in the "long-term polymer-matrix test" as described below.

**Long-term Polymer-Matrix Test**

The household and/or commercial cleaning article of the present invention comprises at least one microbial organism with *Moraxella sp.* inhibiting activity, resulting in particular in a ratio of less than 0.025 in a long-term polymer-matrix test.

The "long-term polymer-matrix test" for measuring the *Moraxella sp.* inhibiting activity of the household and/or commercial cleaning article is defined as a test wherein a 20 g cube of the household and/or commercial cleaning article ("sample") is compared with a standard polymer-matrix sponge cube made of polyurethane with a weight of 20 g ("control") (spatial weight of the sponge is 20 kg/m$^3$, having 20 pores cm$^{-1}$). A probiotic inoculum solution is prepared by resuspending the required amount of spores (prepared according to Nicholson WL, Setlow P (1990) Sporulation, germination and outgrowth. In: Harwood CR, Cutting SM (eds.) Molecular biological methods for Bacillus. John Wiley & Sons Ltd., Chichester, pp 391-450) in sterile saline (0.9% NaCl). The inoculum solution is subsequently injected into the sponge with the help of a sterile syringe (0,45x12mm) by applying 50$\mu$l aliquots uniformly (1 aliquot/cm2) into one cube surface while completely inserting the whole length of the syringe into the sponge material.

In another aspect of the invention the "long-term polymer-matrix test" is used for measuring the *Moraxella sp.* inhibiting activity of the microbial organism on a household and/or commercial cleaning article as follows: A standard sponge cube of 20 g (polyurethane, spatial weight 20 kg/m$^3$, having 20 pores cm$^{-1}$) is inoculated with the microbial organism, such as with 10 ml of a solution comprising about $1 * 10^5$ CFU/cm$^3$ of the microbial organism to be tested (for example a specific strain of *B. subtilis*). The inoculated sponge cube is called the "sample" and compared with the same sponge cube of 20 g (polyurethane, spatial weight 20 kg/m$^3$, having 20 pores cm$^{-1}$) but non-inoculated with the microbial organism ("control").

Then the sample(s) as well as the control(s) is/are subjected to 45 wash and dry cycles.

Each wash and dry cycle consists of the following consecutive steps:

a. submerging each cube for 2 minutes in washing liquid (composition below) at a temperature of 45°C;

b. squeezing each cube three times while submerged in the washing liquid, wherein the cube is squeezed so far that the volume during squeezing is at least less than 50% of the volume of the material in "relaxed" (i.e. "un-squeezed" condition);

c. squeezing each cube one time outside the liquid; (squeezing outside the liquid is done until the sponge has more than 100%, but less than 150% of the weight as compared to the dry weight of the cube before it was submerged in washing liquid);

d. placing the sponge polymer-matrix cube on a draining rack at 20°C for 24 hours.

The washing liquid, as mentioned above, consists of 5L water, 3ml Triton® X 100, and 25ml of a standard broth medium comprising:

- Enzymatic Digest of Soybean 3.0 g/L
- Sodium Chloride 5.0 g/L
- Dipotassium Hydrogen Phosphate 2.5 g/L
- Glucose Monohydrate 2.5 g/L
- wherein the standard broth medium is autoclaved before use at 121°C for 15 minutes;
- and is adjusted to a final pH: 7.3 ± 0.2 at 25°C.

At the end of the long term polymer-matrix test (i.e. after the last drying step), the cubes are directly transferred to homogenization tubes and gDNA preparation is performed as further explained in detail in example 5.

The metagenomics sequencing reads (e.g. by *groEL* sequencing) of the *Moraxella sp.* in the polymer-material are divided by all metagenome reads (e.g. by *groEL* sequencing) from the microbiome sample. The values are given as %.

Formula I:

$$\frac{reads\ (Moraxella\ sp.)}{all\ reads\ of\ microbiome\ sample\ (total)} \, x100 = metagenome\ ratio$$

The metagenome ratio of the polymer-matrix cubes with **Moraxella** sp. inhibiting **a**ctivity was labeled *"mia sample"*. The metagenome ratio of the cubes comprising **no** *Moraxella sp.* inhibiting activity was labeled *"control"*.

The ratio of the long-term polymer-matrix test is then calculated from the metagenome ratio values as follows:

Formula II:

$$\frac{metagenome\ ratio\ (mia\ sample)}{metagenome\ ratio\ (control)} = long\ term\ polymer\ matrix\ test\ ratio$$

An household and/or commercial cleaning article and/or a microbial organism residing on a household and/or commercial cleaning article is considered to have *Moraxella sp.* growth inhibiting activity when the ratio of the long-term polymer-matrix test is 0.025 or less (i.e. a 40-fold reduction of metagenomic proportion of *Moraxella sp.* within the total metagenome reads), preferably 0.02 or less (i.e. 50-fold reduction), more preferably 0.015 or less (i.e. 67-fold reduction), more preferably 0.01 or less (i.e. 100-fold reduction), more preferably 0.005 or less (i.e. 200-fold reduction), more preferably 0.0025 or less (i.e. 400-fold reduction), even more preferably 0.001 or less (i.e. 1000-fold reduction). In some embodiments the presence of *Moraxella sp.* is reduced to such an extent that no metagenomics reads can be detected in the household and/or commercial cleaning article of the present invention.

**Description of VDA 270-method in detail**

The "VDA 270"-method is a test method commonly used in the car industry in order to evaluate the emission of odors from parts and materials in the car interior under the influence of temperature and climate.

The human nose is able to detect certain compounds more sensitively than any other analytical apparatus. Therefore, the tests performed according to the VDA 270-method are carried out by a panel of at least 3 examiners who determine the presence of a particular odor on a scale from 1 to 6. 1 is considered imperceptible and 6 is considered intolerable.

The VDA 270-odor test is performed at temperatures of 23°C +- 2°C. At least 24 hours before the test the dried sponges are kept at the same temperature in closed glass jars.

The procedure may be summarized as follows:

- Whole sponges are placed in 250ml clean glass jars with odorless sealing and screw cap
- Odor test is performed by at least 3 subjects (non-smoker, use of perfume or scented hand lotion precluded on that day) within one week; the same samples are tested by all subjects
- at least 3 reference samples are included in the test to assure that smelling capability of subjects are not restricted and to enable comparison between different odor tests.

The at least 3 subjects then grade the samples with grades from 1 to 6 (1 being the best), wherein the following grading principle is applied:

- Grade 1: smell not recognizable
- Grade 2: recognizable smell, but non-disturbing
- Grade 3: clearly recognizable smell, but still non-disturbing
- Grade 4: disturbing smell
- Grade 5: strong disturbing smell
- Grade 6: unbearable smell

The arithmetic median of the grades given to the sample by the at least 3 subjects is calculated for the sample and the untreated control sponge. The difference of the average grades is then calculated for the samples and control.

In one embodiment the VDA 270-method may be used to compare malodor in a household and/or commercial cleaning article with *Moraxella sp.* inhibiting activity ("sample") to a standard sponge of 20 g (polyurethane, spatial weight 20 kg/m$^3$, having 20 pores cm$^{-1}$) as "control".

In yet a further embodiment two articles with different *Moraxella sp.* inhibiting activities may be compared directly with each other.

Both the "sample" as well as the "control" are subjected to the same washing-drying treatment for 45 cycles as described above for the long-term polymer-matrix test.

After the last drying step, sample material as well as the control are presented double-blinded to the at least three examiners. The average grades determined by the examiners for samples and control are then compared with each other.

In one embodiment, a surface of the household and/or commercial cleaning article according to the present invention shows a *Moraxella sp.* inhibiting activity if the sample shows an improved VDA 270-method grade by at least 0.3 grades, preferably at least 0.33 grades, preferably at least 0.5 grades, preferably at least 0.67 grades, preferable at least 1 grade, more preferably at least 1.33 grades, even more preferably at least 1.5 grades, even more preferably at least 1.67 grades, most preferred at least 2.0 grades or more, as compared to the control.

The arithmetic median of the grades given to the sample by the at least 3 subjects is calculated for the sample and the untreated control sponge by adding all single grades from all examiners divided by the total number of examiners. The difference of the average grades is then calculated for the samples and control.

For example, if the control has an average VDA 270-method odor-grade of 3.3, the sample should have at least an average VDA 270-method odor grade of 3.0 or better.

In yet another embodiment the at least one microbial organism of the *Bacillus subtilis group* within the household and/or commercial cleaning article is heat resistant, so that is survives a heat test. This feature is beneficial, since also *Moraxella sp.* is reported to be heat resistant, and, thus, the *Moraxella sp.* inhibiting effect can even take place after the household and/or commercial cleaning article was submitted to some kind of heat treatment.

**Heat test**

The "heat test" as defined herein comprises subjecting 20 g of the household and/or commercial cleaning article to the following four consecutive heating steps:

1. continuous dry heating for about 30 min. at 62°C;

2. flash dry heating for about 20 sec. at 70 - 74°C;

3. dry superheating for 3 - 5 sec. at 85 - 87°C; and

4. dry ultra-high temperature (UHT) for 1 - 3 sec. at 130 - 150°C.

A microbial organism of the *Bacillus subtilis group* (or spores or other vegetative cell states thereof) on an inventive household and/or commercial cleaning article is considered to be "resistant in a heat test" if after performing all four steps of the heat test with said household and/or commercial cleaning article at least about $1 * 10^2$ to $1 * 10^{10}$ CFU/cm$^3$, preferably about $1 * 10^4$ to $1 * 10^8$ CFU/cm$^3$, most preferred of about $1 * 10^5$ to $1 * 10^7$ CFU/cm$^3$, in one embodiment about $1 * 10^6$ CFU/cm$^3$ can be determined by plating on TSA-standard-plates and incubation at 37°C for 24h as described for the CFU-determination in example 1.

In a further embodiment, the microbial organism of the *Bacillus subtilis group* on the household and/or commercial cleaning article of the present invention also survives 5 minutes heat treatment in a 700-Watt-microwave (20g residual dishwashing liquid/sponge), 10 minutes in a 20% chlorine bleach solution and/or a treatment of at least one washing program in a dish-washer or washing machine (60°C, 30min).

In one embodiment the microbial organism is in the article is resistant against heat up to 95°C.

**Embodiments of the Invention**

In one aspect the invention pertains to a household and/or commercial cleaning article having a textile layer, a foam or sponge layer, and/or an abrasive layer, with *Moraxella sp.* inhibiting activity. Optionally, the article has a *Moraxella sp.* inhibiting activity of a ratio of less than 0.025 in a long-term polymer-matrix test. Additionally or alternatively, the article comprises at least one microbial organism, which has a *Moraxella sp.* inhibiting activity of a ratio of less than 0.025 in a long-term polymer-matrix test.

In one aspect of the invention the article comprises at least one microbial organism of the *Bacillus subtilis* group.

In another aspect the at least one microbial organism of the *Bacillus subtilis group* is selected from the group consisting of *Bacillus amyloliquefaciens, Bacillus tequilensis, Bacillus subtilis, Bacillus atrophaeus, Bacillus vallismortis, Bacillus mojavensis* and/or combinations thereof.

In yet another aspect, the *Moraxella sp.* inhibiting activity of the microbial organism corresponds to a ratio of less than 0.025 in a long-term polymer-matrix test.

In yet another aspect the *Moraxella sp.* inhibiting activity of the microbial organism results in a VDA 270-methodmethod odor grade improvement by at least 0.3 grades, preferably at least 0.33 grades, preferably at least 0.5 grades, preferably at least 0.67 grades, preferable at least 1 grade, more preferably at least 1.33 grades, even more preferably at least 1.5 grades, even more preferably at least 1.67 grades, most preferred at least 2.0 grades or more, as compared to the control. In yet another aspect the malodor originating from *Moraxella sp.* is completely inhibited in the article.

In yet another aspect the microbial organism present on the cleaning article are considered not to endanger human health.

In yet another aspect the microbial organism present on the cleaning article is resistant against heat. A "microbial organism" is considered "heat resistant" herein, if after 1 minute treatment in a microwave (at 1000 Watts) in 1 ml saline solution the microbial organism is present within the microbiome of the article in a concentration of about $1 * 10^2$ to $1 * 10^{10}$ CFU/cm$^3$, preferably in a concentration of about $1 * 10^4$ to $1 * 10^8$ CFU/cm$^3$, more preferred in a concentration of about $1 * 10^6$ to $1 * 10^8$ CFU/cm$^3$, in yet further embodiment in a concentration of about $1 x 10^7$ CFU/cm$^3$.

Less than $1 x 10^2$ CFU/cm$^3$ are not sufficient to show *Moraxella sp.* inhibiting activity with a ratio of less than 0.025 in a long-term polymer-matrix test. More than $1 x 10^{10}$ CFU/cm$^3$ normally do not result in a commensurable improvement of *Moraxella sp.* inhibiting activity and/or malodor improvement as measured with the VDA 270-method. In yet another aspect, the invention pertains to a household and/or commercial cleaning article according to any of the previous claims, wherein the material of the cleaning article comprises synthetic fibers, including polyamide, polyester, polyvinyl alcohol, polyvinyl acetate, polyolefines, polycarbonates, glass, carbon, polylactic acid, polyacrylic, polyhydroxyalcanoates, polylacticacid; natural fibers, such as flax, linen, cotton, sisal, viscose, wool, kapok, hemp, chitosan, chitin; synthetic porous materials, such as polyurethane, polyvinyl acetate, polyvinyl alcohol, melamine, synthetic rubber; natural porous materials, such as cellulose, viscose, collagen, gelatin, glucomannan, natural rubber; chemical binders, such as polyacrylic, polyvinylacetate, phenol formaldehyde resins, urea formaldehyde resins, styrene butadiene rubbers; natural binders, such as lignin, tannins, proteins, pectins, natural rubber, starch, gelatin, cellulose derivatives; synthetic abrasives, such as acrylate, polyurethane, phenolic based resins; natural particles, such as grinded nutshells, silica, alumina, carbonate, pumice and combinations thereof.

In yet another aspect the invention pertains to a household and/or commercial cleaning article having a textile layer, a foam or sponge layer, and/or an abrasive layer with *Moraxella sp.* inhibiting activity, comprising at least one microbial organism of the *Bacillus subtilis group,* wherein the microbial organism is deposited onto the article before, during and/or after the article is brought into contact with *Moraxella sp.* organism.

In yet another aspect the invention pertains to a microbial organism is deposited during a washing process, such as a laundry process, dish-washer process, or hand washing process.

In yet another aspect the invention pertains to the use of the household and/or commercial cleaning article

having a textile layer, a foam or sponge layer, and/or an abrasive layer with a microbial organism with *Moraxella sp.* inhibiting activity of a ratio of less than 0.25 in a long-term polymer-matrix test, in order to inhibit malodor of the article and/or on a surface contacted by the article.

In yet another aspect the invention pertains to said use, wherein the malodor is inhibited resulting in an improved VDA 270-method grade by at least 0.33 grades, preferably at least 0.33 grades, preferably at least 0.5 grades, preferably at least 0.67 grades, preferable at least 1 grade, more preferably at least 1.33 grades, even more preferably at least 1.5 grades, even more preferably at least 1.67 grades, most preferred at least 2.0 grades or more, as compared to the control.

In yet another aspect the invention pertains to a household and/or commercial cleaning article, the method producing such a household and/or commercial cleaning article, and/or the use of such a household and/or commercial cleaning article, wherein the inhibited *Moraxella sp.* is selected from *Moraxella atlantae, Moraxella boevrei, Moraxella bovis, Moraxella bovoculi, Moraxella canis, Moraxella caprae, Moraxella catarrhalis, Moraxella cuniculi, Moraxella equi, Moraxella lacunata, Moraxella lincolnii, Moraxella nonliquefaciens, Moraxella oblonga, Moraxella osloensis, Moraxella pluranimalium, Moraxella saccharolytica, Moraxella urethralis,* or any combination thereof.

Short Description of the Figures

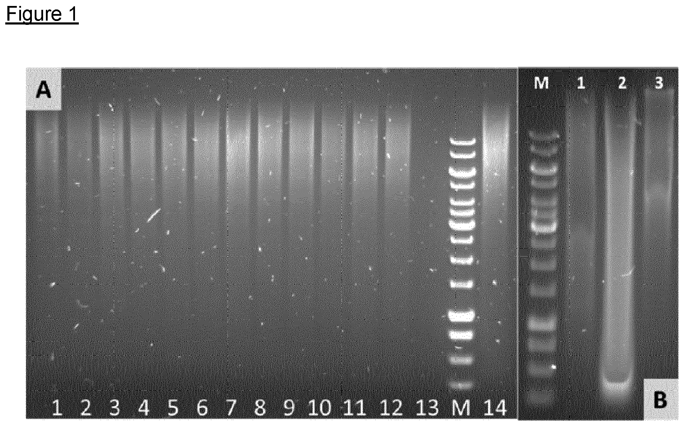

Figure 1 - An agarose gel electrophoretic analysis of gDNA extraction samples is shown. A1-12 are representative samples of harvested sponges after 6 weeks life cycle; A13 is a sample of an untreated sponge; A14 is a sample of a sponge from a household kitchen use; B1 is a sample inoculated with microbial organism of the *Bacillus subtilis group* (vegetative cell culture sample); B2 is a sample inoculated with microbial organism of the *Bacillus subtilis group* (spore sample); B3 is a sample inoculated with microbial organism of the *Bacillus subtilis group* spores in sponge matrix sample; M is a "gene ruler" with a 1kb ladder.

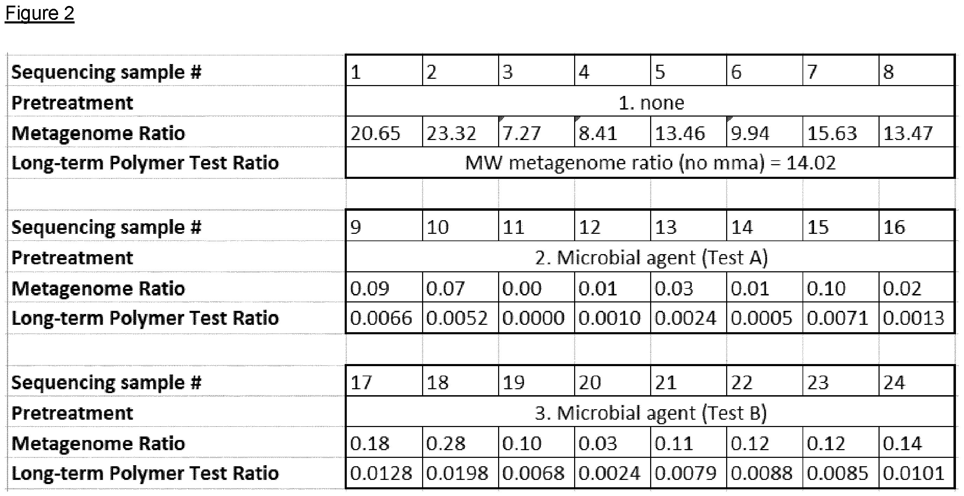

Figure 2 - Metagenome ratio values and long-term polymer matrix test ratio values of sequencing samples (see Formula I and II) based on phylogenetic allocation of sequencing reads generated from sponge samples after undergoing the long-term polymer matrix test. Each sequencing sample represents a gDNA pool from 3 identically treated sponges.

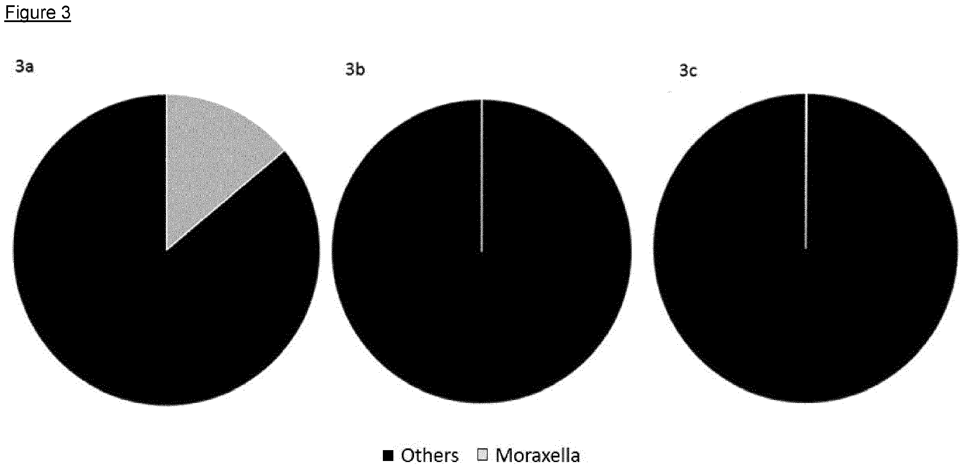

Figure 3 - Comparison of the average phylogenetic allocation of 8 sponge samples with and without *Moraxella sp.* inhibiting activity.

Figure 3a - Comparison of the average phylogenetic allocation of 8 sponge samples without *Moraxella sp.* inhibiting activity. The metagenome sequencing reads were generated from sponges after undergoing the long-term polymer matrix test. The average total sequencing readout of the microbiome (about 10 different bacterial genera) was set to 100%, the average percentage of *Moraxella sp.* within that microbiome was about 14% (13.94%).

Figure 3b - Comparison of the average phylogenetic allocation of 8 sponge samples with *Moraxella sp.* inhibiting activity (group A). The metagenome sequencing reads were generated from sponges after undergoing the long-term polymer matrix test. The average total sequencing readout of the microbiome (about 10 different bacterial genera) was set to 100%, the average percentage of *Moraxella sp.* within that microbiome was about 0.03% (0.031 %). Thus, the *Moraxella sp.* within the microbiome was reduced by a factor of about 470.

Figure 3c - Comparison of the average phylogenetic allocation of 8 sponge samples with *Moraxella sp.* inhibiting activity (group B). The metagenome sequencing reads were generated from sponges after undergoing the long-term polymer matrix test. The average total sequencing readout of the microbiome (about 10 different bacterial genera) was set to 100%, the average percentage of *Moraxella sp.* within that microbiome was about 0.14% (0.135%). Thus, the *Moraxella sp.* within the microbiome was reduced by a factor of about 100.

Examples

**Example 1: CFU determination from surfaces**

Microbial organisms are sampled from the surface of a cleaning sponge by washing 9 cm$^2$ of the surface of the sponge with 10 ml PBS-buffer. The collected buffer solution is heat treated in a water bath at 80°C for 5 minutes. The buffer solution is then plated on ready-to-use monitoring contact plates, TSA with LTH-Thio cont.-ICR+ (Merck-Millipore, USA).

After incubation of the closed contact plates for 24 h at 37°C, colonies are counted and harvested for identification with sterile 10 μl inoculating loops (Neolab Migge GmbH, Germany) and resuspended in 20 μl B-Per reagent (Fischer-Scientific, USA).

After incubation for 15 min at 37°C, 30 μl MilliQ water are added and 1 μl of the mixture applied in a colony PCR targeting the *groEL* locus (Biosci Biotechnol Biochem.; 1992 Dec; 56(12):1995-2002; doi: 10.1271/bbb.56.1995) as follows:

- 7.5 μL Phusion Flash Mastermix (FischerScientific, Germany)

- 1 μL Primer 60-A, 10 pmol/μl (5'-ACCCTGGGCCCGAGGGCCGCAACGTCGT) (SEQ ID. No 1)

- 1 μL Primer 160-B, 10 pmol/μl (5'-TGACCGCGACGCCGCCCGCCAGCTTCGC) (SEQ ID. No 2)

- 4.5 μL MilliQ-Wasser

- 1 μL B-Per mixture

The following PCR-protocol was used:

| PCR-Cycles | |
|---|---|
| • 94°C | • 01:00 |
| • -----30 cycles of ------ | |
| • 94°C | • 00:10 |
| • 55°C | • 00:20 |
| • 72°C | • 00:20 |
| • -------------------- | |
| • 72°C | • 01:00 |
| • 10°C | • hold |

The 1.1 kb PCR product is subsequently sequenced for strain identification of the microbial organism.

This CFU determination may be used for example to determine the CFUs of a microbial organism with *Moraxella sp.* inhibiting activity as well as CFUs of *Moraxella sp.* itself.

**Example 2: Preparation of a nutrient-mastermix**

A mastermix of nutrient and microbial organism sources typical for kitchen/household usage ("feed") was established for inclusion in each washing step. The raw materials and respective amounts are summarized in Tab. 1. One big homogenous mastermix was established by adding all materials to a blender. At this point, household dust collected with a hand held vacuum cleaner in the kitchen/living room of 8 different households was added as additional source. The feed mastermix was subsequently homogenized, aliquoted (15ml) and stored at -80°C until the day of use. The bread crumps mixture (1:1 of regular and Panko crumbs) was also established as one batch (stored in an airtight container at room temperature) which was used throughout the life cycle.

**Table 1: Composition and preparation of a feed mastermix for a sponge life cycle experiment.**

| source | amount / cleaning | amount 50d | preparation |
|---|---|---|---|
| **Starchy cooking liquid** | 5ml | 250ml | 1.5 kg noodles (in 0.5 kg batches) boiled in same pot, water refilled as necessary |
| **Frying oil / meat juice / residues** | 5ml + residues | 12 Steaks | fried in cooking oil (refill as necessary), steaks removed, pan deglazed with water (ca 50ml), complete content applied for feed |

(continued)

| source | amount / cleaning | amount 50d | preparation |
|---|---|---|---|
| Frying oil / meat juice / residues | 5ml + residues | 12 Sausages | fried in cooking oil (refill as necessary), sausages removed, pan deglazed with water (ca 50ml), complete content applied for feed |
| Milk (3.5%) | 4ml | 200ml | as is |
| Yoghurt (1.5%) | 5g | 250g | as is |
| Camembert | 1g | 50g | as is |
| Potato washing water | | 100ml | 100ml water used for washing 10 potatos by hand |
| Ketchup | 2g | 100g | as is |
| Mayonnaise | 2g | 100g | as is |
| Nutella | 2g | 100g | as is |
| Noodle sauce | 5ml | | instant mushroom sauce (for 250ml product) dissolved in noodle cooking water |
| White wine vinegar | 2g | 100g | as is |
| Glycerol | | 225ml | targeting 15% final concentration |
| Sum volume for 100 aliquots a 15ml | | 1500ml | |
| Bread crumbs | not included in frozen feed stock | | Pre-mix (1:1) of regular and Panko crumbs, 10ml portioned and rubbed in bare hands |

**Example 3: Long-term test with polymer-matrices**

Sponge treatment groups 1-3 each consisted of 24 non-inoculated (1) or pre-inoculated sponges (2, strain A; 3, strain B). Each group encompassed two sponge types (12 sponges each), made from polyurethane (PU) and cellulose (CE), respectively. After 4 weeks of Life Cycle, each group of 12 identical (material, inoculum) sponges was further divided into 6 sponges continuing the original polymer-matrix test routine A (group "A") and 6 sponges were switched from routine A to a modified polymer-matrix test routine B (group "AB"). Test groups are summarized in Tab. 2.

Test sponges were devoid of silver chloride finishing and any finishing present on new sponges was washed out prior to the start of the polymer-matrix test. Microbial inoculum was injected with syringes one day prior to the start of the polymer-matrix test and all sponges were completely dry before entering the polymer-matrix test schedule. Furthermore original size sponges were cut in half and each half served as one individual test sponge.

**Table 2: Overview of the sponge treatment groups**

| Sequencing sample # | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|
| Probiotic Inoculum | 1. none | | | | | | | | 2. inoculated (strain A) | | | | | | | | 3. inoculated (strain B) | | | | | | | |
| Sponge Treatment Group | 1A | 1A | 1AB | 1AB | 1A | 1A | 1AB | 1AB | 2A | 2A | 2AB | 2AB | 2A | 2A | 2AB | 2AB | 3A | 3A | 3AB | 3AB | 3A | 3A | 3AB | 3AB |
| Life Cycle Routine (w, weeks, type A/B) | 6w A | | 4w A 2w B | | 6w A | | 4w A 2w B | | 6w A | | 4w A 2w B | | 6w A | | 4w A 2w B | | 6w A | | 4w A 2w B | | 6w A | | 4w A 2w B | |
| Sponge material | PU | PU | PU | PU | CE | CE | CE | CE | PU | PU | PU | PU | CE | CE | CE | CE | PU | PU | PU | PU | CE | CE | CE | CE |

The polymer-matrix test schedule (routine A, see Tab. 3) consisted of alternating washing steps (once daily Monday to Friday) and washing pauses (Saturday & Sunday). It was continued for 45 days. After 4 weeks, all sponge groups were split into two sub-groups "A" and "AB", one of which was continued on routine A, the other was treated differently on day 32 and day 39 (routine B). On these days, washing liquid was not squeezed out from the sponges but they were placed back into their storage container dripping wet. Each of the 3 treatment groups had their dedicated storage contained with mesh wire as well as their dedicated metal bowl for washing.

**Table 3: Sponge life cycle schedule**

|  | Mo | Tue | Wed | Thu | Fri | Sat | Sun |
|---|---|---|---|---|---|---|---|
| **routine A** | 1x cleaning & squeezing | 1x cleaning & squeezing | 1x cleaning & squeezing | 1x cleaning & squeezing | 1x cleaning & squeezing | pause | pause |
| **routine B** | 1x cleaning & squeezing | 1x cleaning & squeezing | 1x cleaning & squeezing | 1x cleaning & squeezing | 1x cleaning w/o squeezing | pause | pause |

Each washing step started by setting up the washing liquid comprising (for each treatment group) 5L of 45 °C tap water, 3ml Pril Kraft Gel Ultra Plus™/Sensitive AloeVera, a 15ml feed mastermix aliquot (freshly thawed) and 10ml bread crumbs. The washing liquid for each group was prepared with bare hands, including bread crumbs being rubbed in both hands and subsequently washing them off in fresh washing liquid.

All subsequent handling steps involving sponges were performed with gloved hands only. All sponges belonging to one of the treatment groups were submerged in washing liquid in their group specific washing bowl, squeezed 2 times in the liquid and once outside the liquid before being placed back into their group specific storage container. Treatment sponges were stored in separate, open (room atmosphere, daylight) containers, with no contact between individual sponges and sitting on mesh wire allowing dripping of excess liquid. Sponges were assessed with respect to their smell on a weekly basis. Washing bowls were cleaned after use by applying a per-acetic acid based disinfectant and rinsing with water. Additionally, bowls were sterilized once weekly using dry heat.

**Example 4: VDA 270-method (odor test)**

Sponges are evaluated using an odor test which was performed essentially as described in the standard procedure VDA 270 ("*Bestimmung des Geruchsverhaltens von Werkstoffen der Kraftfahrzeug-Innenausstattung*").

Sponges with *Moraxella sp.* inhibiting activity ("sample") are compared to a standard sponge of 20 g (polyurethane, spatial weight 20 kg/$m^3$, having 20 pores $cm^{-1}$) as "control".

In a first test 28 households were provided with sponges which were in use for 6 weeks. After a break of two weeks the 28 households were provided with new sponges for another 6 weeks.

Half of the households received in the first turn sponges with *Moraxella sp.* inhibiting activity, the other half received in the first turn sponges without *Moraxella sp.* inhibiting activity. In the second turn the distribution of sponges was inverted, that is the households which had received sponges with *Moraxella sp.* inhibiting activity in the first turn then received sponges without *Moraxella sp.* inhibiting activity and vice-versa.

After the first turn and second turn the sponges were assessed by odor-testers in the described VDA method.

The arithmetic median of the VDA 270 grades of sponges without *Moraxella sp.* inhibiting activity was at 2.9, the arithmetic median of the VDA 270 grades of sponges with *Moraxella sp.* inhibiting activity was at 2.6. The VDA 270 grade improvement of at least 0.3 as compared to the control sponges indicated improved odor.

In a second test sponges with and without *Moraxella sp.* inhibiting activity are inoculated with 10 ml of a solution comprising about 1 * $10^5$ CFU/$cm^3$of *Moraxella sp.* per 20 g sponge (sponge group 01) and/or 50 $\mu$l/mg sponge of *Moraxella sp.* enzyme degradation products (sponge groups 02 & 03) known for malodor and then treated in the long-term polymer matrix test as described above.

The arithmetic median of the VDA 270 grades 1 to 6 given to the sample by the at least 3 examiners is calculated for the sample and the untreated control sponge. The difference of the average grades is then calculated for the samples and control.

The following result is depicted in table 4:

| Sponge group | Sample (Average Grade) | Control* (Average Grade) | VDA 270 Grade improvement |
|---|---|---|---|
| Control* | 3.33 | 3.33 | 0 (internal control) |
| Sponge group 01 | 2.0 | 3.33 | 1.33 |

(continued)

| Sponge group | Sample (Average Grade) | Control* (Average Grade) | VDA 270 Grade improvement |
|---|---|---|---|
| Sponge group 02 | 2.67 | 3.33 | 0.66 |
| Sponge group 03 | 3.0 | 3.33 | 0.33 |
| (*sponges without *Moraxella sp.* inhibiting activity) | | | |

A VDA 270 grade improvement of at least 0.3 as compared to the control sponges indicates improved odor.

**Example 5: Metagenome Analysis**

After 45 days of Life Cycle (1 day after the last washing step), all sponges were harvested by cutting them in half and stored at -80°C until further use. For gDNA preparation, aliquots of the sponges were removed by scalpel and directly transferred to homogenization tubes (which allow subsequent mechanical lysis of cells in the FastPrep™ device). Cutting was performed in such a way as to obtain a representative sample of all parts of the sponge (soft/hard outer side, interior part).

Several aliquots from each harvested sponge were combined in one gDNA preparation (using FastPrep™ Soil Kit).

Three gDNA preparations representing 3 sponges (between 300-800 mg sponge in total) of the same group were pooled to obtain one sequencing sample. Size distribution of gDNA preparation was estimated via agarose gel electrophoresis.

1 $\mu$g of the prepared sponge DNA was used as the input material for the Nanopore library preparation. Library preparation was performed using an edited version of Ligation Sequencing Kit (LSK_109) and the final library was loaded and sequenced using a R9.4 Minion Flow-Cell. Basecalling of the generated reds was performed using Guppy and quality scores and read lengths were analyzed using NanoPlot.

Furthermore, the capability of extracting gDNA also from spores was confirmed likewise. Additional gDNA preparations were obtained using the washing liquid squeezed out from one sponge per group during the final washing step. For this sample type, some groups could not be included in sequencing due to gDNA loss in preparation. The 30 resulting sequencing samples (see Tab. 5) were subsequently applied for Oxford Nanopore sequencing (2 flow cells).

Based on Blast search performed with the obtained reads, the phylogenetic composition was established. Phylogenetic allocation of reads in each sample (in % of total reads) and metagenome ratios for representatives of *Moraxella spec.* are summarized in Fig. 2.

**Table 5: Overview of gDNA yields from different sponge groups and samples.**

| sequencing sample # | number of individual sponges included in gDNA Pool | Sponge Treatment Group | sponge material | mg dry material prepped | µg gDNA yield | ng gDNA/mg sponge |
|---|---|---|---|---|---|---|
| 1 | 3 | 1A | PU | 425.2 | 2.66 | 6.26 |
| 2 | 3 | 1A | PU | 565.9 | 3.78 | 6.68 |
| 3 | 3 | 1AB | PU | 537 | 9.94 | 18.51 |
| 4 | 3 | 1AB | PU | 563.9 | 9.52 | 16.88 |
| 5 | 3 | 1A | CE | 689.2 | 5.04 | 7.31 |
| 6 | 3 | 1A | CE | 810.2 | 5.18 | 6.39 |
| 7 | 3 | 1AB | CE | 667.5 | 6.72 | 10.07 |
| 8 | 3 | 1AB | CE | 682.7 | 7.84 | 11.49 |
| 9 | 3 | 2A | PU | 400.3 | 5.18 | 12.94 |
| 10 | 3 | 2A | PU | 479.8 | 6.58 | 13.71 |
| 11 | 3 | 2AB | PU | 453.6 | 11.2 | 24.69 |
| 12 | 3 | 2AB | PU | 395.9 | 9.8 | 24.75 |
| 13 | 3 | 2A | CE | 657.1 | 13.02 | 19.81 |
| 14 | 3 | 2A | CE | 684.1 | 11.2 | 16.37 |
| 15 | 3 | 2AB | CE | 609.2 | 14.42 | 23.67 |
| 16 | 3 | 2AB | CE | 587.6 | 13.02 | 22.16 |
| 17 | 3 | 3A | PU | 335 | 3.22 | 9.61 |
| 18 | 3 | 3A | PU | 431.4 | 3.36 | 7.79 |
| 19 | 3 | 3AB | PU | 527.9 | 10.08 | 19.09 |
| 20 | 3 | 3AB | PU | 496.2 | 12.18 | 24.55 |
| 21 | 3 | 3A | CE | 623.4 | 8.96 | 14.37 |
| 22 | 3 | 3A | CE | 710.7 | 9.66 | 13.59 |
| 23 | 3 | 3AB | CE | 675.1 | 11.2 | 16.59 |
| 24 | 3 | 3AB | CE | 748.2 | 11.9 | 15.90 |
| 25 | 1A, 1AB CE Pool | | CE | | 6.03 | |
| 26 | 1A, 1AB, PU Pool | | PU | | 7.29 | |
| 27 | 2A, 2AB CE Pool | | CE | | 8.46 | |
| 28 | 2AB, PU | | PU | | 5.67 | |
| 29 | 3A CE | | CE | | 3.24 | |
| 30 | 3A, 3AB PU Pool | | PU | | 8.1 | |

**Claims**

1. A household and/or commercial cleaning article having a textile layer, a foam or sponge layer, and/or an abrasive layer, with *Moraxella sp.* inhibiting activity.

2. The household and/or commercial cleaning article according to claim 1, wherein the article has a *Moraxella sp.* inhibiting activity of a ratio of less than 0.025 in a long-term polymer-matrix test.

3. The household and/or commercial cleaning article according to claims 1 or 2, wherein the article comprises at least one microbial organism, which has a *Moraxella sp.* inhibiting activity of a ratio of less than 0.025 in a long-term polymer-matrix test.

4. The household and/or commercial cleaning article according to claim 3, wherein the article comprises at least one microbial organism of the *Bacillus subtilis* group.

5. The household and/or commercial cleaning article according to claim 4, wherein the at least one microbial organism of the *Bacillus subtilis group* is selected from the group comprising *Bacillus amyloliquefaciens, Bacillus tequilensis, Bacillus subtilis, Bacillus atrophaeus, Bacillus vallismortis, Bacillus mojavensis* and/or a mixture thereof.

6. The household and/or commercial cleaning article according to any of any of the previous claims, wherein the *Moraxella sp.* inhibiting activity results in an odor difference of at least 0.3 grades, preferably of at least 0.5 grades, most preferably of at least 1.0 grade as measured by the VDA 270-method.

7. The household and/or commercial cleaning article according to any of claims 3 to 6, wherein the microbial organism in the article is resistant in a heat test.

8. The household and/or commercial cleaning article according to any of claims 3 to 7, wherein the microbial organism of the *Bacillus subtilis* group is present within the article in a concentration of about $1 * 10^2$ to $1 * 10^{10}$ CFU/cm$^3$.

9. The household and/or commercial cleaning article according to any of the previous claims, wherein the material of the cleaning article comprises synthetic fibers, including polyamide, polyester, polyvinyl alcohol, polyvinyl acetate, polyolefines, polycarbonates, glass, carbon, polylactic acid, polyacrylic, polyhydroxyalcanoates, polylacticacid; natural fibers, such as flax, linen, cotton, sisal, viscose, wool, kapok, hemp, chitosan, chitin; synthetic porous materials, such as polyurethane, polyvinyl acetate, polyvinyl alcohol, melamine, synthetic rubber; natural porous materials, such as cellulose, viscose, collagen, gelatin, glucomannan, natural rubber; chemical binders, such as polyacrylic, polyvinylacetate, phenol formaldehyde resins, urea formaldehyde resins, styrene butadiene rubbers; natural binders, such as lignin, tannins, proteins, pectins, natural rubber, starch, gelatin, cellulose derivatives; synthetic abrasives, such as acrylate, polyurethane, phenolic based resins; natural particles, such as grinded nutshells, silica, alumina, carbonate, pumice and combinations thereof.

10. Method of producing a household and/or commercial cleaning article having a textile layer, a foam or sponge layer, and/or an abrasive layer with *Moraxella sp.* inhibiting activity, comprising at least one microbial organism of the *Bacillus subtilis group,* wherein the microbial organism is deposited onto the article before, during and/or after the article is brought into contact with *Moraxella sp.* organism.

11. The method according to claim 10, wherein the microbial organism is applied to the household and/or commercial cleaning article by injecting, impregnating, immersing, spraying, printing, calendaring, and/or dipping process followed by drying.

12. Use of a microbial organism with *Moraxella sp.* inhibiting activity, in particular having a ratio of less than 0.025 in a long-term polymer-matrix test, for inhibiting malodor in a household and/or commercial cleaning article and/or on a surface contacted by the household and/or commercial cleaning article.

13. The use according to claim 12, wherein the malodor is inhibited in a household and/or commercial cleaning article corresponding with a odor difference of at least 0.3 grades, preferably of at least 0.5 grades, most preferably of at least 1.0 grade as measured by the VDA 270-method.

14. The household and/or commercial cleaning article according to any of claims 1 to 9, the method according to any of claims 10 or 11, and/or the use according to any of claims 12 or 13, wherein the inhibited *Moraxella sp.* is selected from *Moraxella atlantae, Moraxella boevrei, Moraxella bovis, Moraxella bovoculi, Moraxella canis, Moraxella caprae, Moraxella catarrhalis, Moraxella cuniculi, Moraxella equi, Moraxella lacunata, Moraxella lincolnii, Moraxella nonliquefaciens, Moraxella oblonga, Moraxella osloensis, Moraxella pluranimalium, Moraxella saccharolytica, Moraxella urethralis,* or any combination thereof.


**Amended claims in accordance with Rule 137(2) EPC.**

1. A household and/or commercial cleaning article having a textile layer, a foam or sponge layer, and/or an abrasive layer, with *Moraxella sp.* inhibiting activity as measured by metagenome analysis; wherein the article comprises at least one microbial organism of the *Bacillus subtilis* group, selected from the group comprising *Bacillus amylolique-*

*faciens, Bacillus tequilensis, Bacillus subtilis, Bacillus atrophaeus, Bacillus vallismortis, Bacillus mojavensis* and/or a mixture thereof;

wherein the microbial organism fulfil the requirements of the Qualified Presumption of Safety (OPS) regulation by the European Food Safety Authority (EFSA); and
wherein the microbial organism of the *Bacillus subtilis* group is present within the article in a concentration of about $1 * 10^2$ to $1 * 10^{10}$ CFU/cm$^3$.

2. The household and/or commercial cleaning article according to claim 1, wherein the article has a *Moraxella sp.* inhibiting activity of a ratio of less than 0.025 in a long-term polymer-matrix test.

3. The household and/or commercial cleaning article according to claims 1 or 2, wherein the article comprises at least one microbial organism, which has a *Moraxella sp.* inhibiting activity of a ratio of less than 0.025 in a long-term polymer-matrix test.

4. The household and/or commercial cleaning article according to any of any of the previous claims, wherein the *Moraxella sp.* inhibiting activity results in an odor difference of at least 0.3 grades, preferably of at least 0.5 grades, most preferably of at least 1.0 grade as measured by the VDA 270-method.

5. The household and/or commercial cleaning article according to according to any of any of the previous claims, wherein the microbial organism in the article is resistant in a heat test.

6. The household and/or commercial cleaning article according to any of the previous claims, wherein the material of the cleaning article comprises synthetic fibers, including polyamide, polyester, polyvinyl alcohol, polyvinyl acetate, polyolefines, polycarbonates, glass, carbon, polylactic acid, polyacrylic, polyhydroxyalcanoates, polylacticacid; natural fibers, such as flax, linen, cotton, sisal, viscose, wool, kapok, hemp, chitosan, chitin; synthetic porous materials, such as polyurethane, polyvinyl acetate, polyvinyl alcohol, melamine, synthetic rubber; natural porous materials, such as cellulose, viscose, collagen, gelatin, glucomannan, natural rubber; chemical binders, such as polyacrylic, polyvinylacetate, phenol formaldehyde resins, urea formaldehyde resins, styrene butadiene rubbers; natural binders, such as lignin, tannins, proteins, pectins, natural rubber, starch, gelatin, cellulose derivatives; synthetic abrasives, such as acrylate, polyurethane, phenolic based resins; natural particles, such as grinded nutshells, silica, alumina, carbonate, pumice and combinations thereof.

7. Method of producing a household and/or commercial cleaning article having a textile layer, a foam or sponge layer, and/or an abrasive layer with *Moraxella sp.* inhibiting activity, comprising at least one microbial organism of the *Bacillus subtilis group,* wherein the microbial organism is deposited onto the article before, during and/or after the article is brought into contact with *Moraxella sp.* organism.

8. The method according to claim 7, wherein the microbial organism is applied to the household and/or commercial cleaning article by injecting, impregnating, immersing, spraying, printing, calendaring, and/or dipping process followed by drying.

9. Use of a microbial organism with *Moraxella sp.* inhibiting activity, of the *Bacillus subtilis group,* selected from the group comprising *Bacillus amyloliquefaciens, Bacillus tequilensis, Bacillus subtilis, Bacillus atrophaeus, Bacillus vallismortis, Bacillus mojavensis* and/or a mixture thereof; wherein the microbial organism fulfil the requirements of the Qualified Presumption of Safety (OPS) regulation by the European Food Safety Authority (EFSA); in particular having a ratio of less than 0.025 in a long-term polymer-matrix test, for inhibiting malodor in a household and/or commercial cleaning article and/or on a surface contacted by the household and/or commercial cleaning article.

10. The use according to claim 9, wherein the malodor is inhibited in a household and/or commercial cleaning article corresponding with a odor difference of at least 0.3 grades, preferably of at least 0.5 grades, most preferably of at least 1.0 grade as measured by the VDA 270-method.

11. The household and/or commercial cleaning article according to any of claims 1 to 6, the method according to any of claims 7 or 8, and/or the use according to any of claims 9 or 10, wherein the inhibited *Moraxella sp.* is selected from *Moraxella atlantae, Moraxella boevrei, Moraxella bovis, Moraxella bovoculi, Moraxella canis, Moraxella caprae, Moraxella catarrhalis, Moraxella cuniculi, Moraxella equi, Moraxella lacunata, Moraxella lincolnii, Moraxella nonliquefaciens, Moraxella oblonga, Moraxella osloensis, Moraxella pluranimalium, Moraxella saccharolytica, Moraxella*

*urethralis,* or any combination thereof.

Figure 1

## Figure 2

| Sequencing sample # | 1 | 2 | 3 | 4 | 5 | 6 | 7 | 8 |
|---|---|---|---|---|---|---|---|---|
| Pretreatment | 1. none | | | | | | | |
| Metagenome Ratio | 20.65 | 23.32 | 7.27 | 8.41 | 13.46 | 9.94 | 15.63 | 13.47 |
| Long-term Polymer Test Ratio | MW metagenome ratio (no mma) = 14.02 | | | | | | | |

| Sequencing sample # | 9 | 10 | 11 | 12 | 13 | 14 | 15 | 16 |
|---|---|---|---|---|---|---|---|---|
| Pretreatment | 2. Microbial agent (Test A) | | | | | | | |
| Metagenome Ratio | 0.09 | 0.07 | 0.00 | 0.01 | 0.03 | 0.01 | 0.10 | 0.02 |
| Long-term Polymer Test Ratio | 0.0066 | 0.0052 | 0.0000 | 0.0010 | 0.0024 | 0.0005 | 0.0071 | 0.0013 |

| Sequencing sample # | 17 | 18 | 19 | 20 | 21 | 22 | 23 | 24 |
|---|---|---|---|---|---|---|---|---|
| Pretreatment | 3. Microbial agent (Test B) | | | | | | | |
| Metagenome Ratio | 0.18 | 0.28 | 0.10 | 0.03 | 0.11 | 0.12 | 0.12 | 0.14 |
| Long-term Polymer Test Ratio | 0.0128 | 0.0198 | 0.0068 | 0.0024 | 0.0079 | 0.0088 | 0.0085 | 0.0101 |

Figure 3

3a

3b

3c

■ Others ☐ Moraxella

Europäisches
Patentamt

European
Patent Office

Office européen
des brevets

## EUROPEAN SEARCH REPORT

Application Number

EP 21 18 1511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/157773 A1 (HENKEL AG & CO KGAA [DE]) 21 September 2017 (2017-09-21) * paragraph [0001] * * paragraph [0004] * * paragraph [0009] * * paragraph [0011] * * paragraph [0155] - paragraph [0156]; example 3 * | 1-14 | INV.<br>C11D3/38<br>C11D3/48<br>C11D7/40<br>C11D17/04<br>A01N63/22<br>C11D3/00 |
| X | US 2013/210061 A1 (MITANI ASAKO [JP] ET AL) 15 August 2013 (2013-08-15) * paragraphs [0062] - [0094]; table 4 * | 1-11 | |
| X | WO 2013/171343 A2 (EDMIRE BVBA [BE]) 21 November 2013 (2013-11-21) * paragraph [0001] * * paragraph [0008] - paragraph [0011] * * paragraph [0024] - paragraph [0029] * | 1-11 | |
| X | US 2018/325117 A1 (HOLMES GARY [US]) 15 November 2018 (2018-11-15) * paragraph [0007] * * paragraph [0009] - paragraph [0013] * * paragraph [0049] * * paragraph [0051]; examples * | 1-11 | TECHNICAL FIELDS SEARCHED (IPC)<br><br>C11D<br>A01N |
| X | US 5 744 688 A (VANCE PAULA [US] ET AL) 28 April 1998 (1998-04-28) * paragraph [0001]; examples 2,3 * | 1-11 | |

-/--

The present search report has been drawn up for all claims

| Place of search | Date of completion of the search | Examiner |
|---|---|---|
| The Hague | 3 December 2021 | Marttin, Emmeline |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 21 18 1511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CARDINALE MASSIMILIANO ET AL: "Microbiome analysis and confocal microscopy of used kitchen sponges reveal massive colonization by Acinetobacter, Moraxella and Chryseobacterium species", SCIENTIFIC REPORTS, vol. 7, no. 1, 1 December 2017 (2017-12-01), pages 1-13, XP055859159, DOI: 10.1038/s41598-017-06055-9 Retrieved from the Internet: URL:https://www.nature.com/articles/s41598-017-06055-9.pdf> * the whole document * | 1-14 | |
| A | Anonymous: "The kitchen sponge - A welcome host to germs - The Secret Life Of Skin", , 20 November 2019 (2019-11-20), pages 1-6, XP055868287, Retrieved from the Internet: URL:https://thesecretlifeofskin.com/2019/11/20/the-kitchen-sponge-a-welcome-host-to-germs/ [retrieved on 2021-12-01] * page 2, paragraph 4 - page 3, paragraph 5 * | 1-14 | TECHNICAL FIELDS SEARCHED (IPC) |

The present search report has been drawn up for all claims

| Place of search | Date of completion of the search | Examiner |
|---|---|---|
| The Hague | 3 December 2021 | Marttin, Emmeline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 21 18 1511

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2021

| Patent document cited in search report | | Publication date | Patent family member(s) | | Publication date |
|---|---|---|---|---|---|
| WO 2017157773 | A1 | 21-09-2017 | EP | 3430117 A1 | 23-01-2019 |
| | | | ES | 2798926 T3 | 14-12-2020 |
| | | | PL | 3430117 T3 | 16-11-2020 |
| | | | US | 2019085267 A1 | 21-03-2019 |
| | | | WO | 2017157773 A1 | 21-09-2017 |
| US 2013210061 | A1 | 15-08-2013 | AU | 2011306115 A1 | 02-05-2013 |
| | | | CN | 103270415 A | 28-08-2013 |
| | | | EP | 2620769 A1 | 31-07-2013 |
| | | | JP | 5670810 B2 | 18-02-2015 |
| | | | JP | 2012088297 A | 10-05-2012 |
| | | | SG | 188430 A1 | 30-04-2013 |
| | | | TW | 201217779 A | 01-05-2012 |
| | | | US | 2013210061 A1 | 15-08-2013 |
| | | | WO | 2012039261 A1 | 29-03-2012 |
| WO 2013171343 | A2 | 21-11-2013 | NONE | | |
| US 2018325117 | A1 | 15-11-2018 | AU | 2016344406 A1 | 31-05-2018 |
| | | | CA | 3002788 A1 | 04-05-2017 |
| | | | CN | 108347947 A | 31-07-2018 |
| | | | EP | 3370528 A1 | 12-09-2018 |
| | | | JP | 6790104 B2 | 25-11-2020 |
| | | | JP | 2019502748 A | 31-01-2019 |
| | | | US | 2018325117 A1 | 15-11-2018 |
| | | | WO | 2017074485 A1 | 04-05-2017 |
| | | | ZA | 201803451 B | 28-08-2019 |
| US 5744688 | A | 28-04-1998 | US | 5744688 A | 28-04-1998 |
| | | | US | 5932173 A | 03-08-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Brazilian Journal of Infectious Diseases,* January 2018, vol. 22 (1), 60-62
- *Probiotics Antimicrob Proteins,* September 2019, vol. 11 (3), 731-747
- Sporulation, germination and outgrowth. **NICHOLSON WL ; SETLOW P.** Molecular biological methods for Bacillus. John Wiley & Sons Ltd, 1990, 391-450
- *Biosci Biotechnol Biochem.,* December 1992, vol. 56 (12), 1995-2002